# EUROPÄISCHE PATENTANMELDUNG

(11) **EP 1 021 028 A2**
(43) Veröffentlichungstag der Anmeldung: **19.07.2000**
(21) Anmeldenummer: 00100344.1
(22) Anmeldetag: 07.01.2000
(51) Int. Cl.: H04M 3/51, H04M 3/523

(54) **Vorrichtung zur Vermittlung von Anrufen oder Meldungen an für Agenten vorgesehene Arbeitsplätze**

(30) Priorität: 13.01.1999 CH 4999; 11.03.1999 CH 45799
(71) Anmelder: Siemens Schweiz AG, 8047 Zürich (CH)
(72) Erfinder: Dütsch, Marco, 8352 Räterschen (CH)

(57) **Zusammenfassung**

Eine Vorrichtung zur Vermittlung (10) von Anrufen und/oder Meldungen an für Agenten vorgesehene Arbeitsplätze (1) weist pro Arbeitsplatz ein Datenverarbeitungssystem (7) und/oder ein Sprachendgerät (2) auf. Datenverarbeitungssystem (7) und/oder Sprachendgerät (2) sind mit der Vermittlungsvorrichtung (10) verbunden (3, 4, 5). Jedem Arbeitsplatz ist wenigstens ein Detektor (6, 19) zugeordnet, durch den die tatsächliche Anwesenheit eines Agenten feststellbar ist. Die von den Detektoren (6) festgestellten Belegungszustände der Arbeitsplätze sind der Vermittlungsvorrichtung (10) zuführbar und dort registrierbar. Die zu vermittelnden Anrufe und/oder Meldungen werden von der Vermittlungsvorrichtung (10) in Abhängigkeit der registrierten Belegungszustände an jene Arbeitsplätze (1) durchgeschaltet, die durch einen Agenten belegt sind.

## Beschreibung

Die vorliegende Erfindung betrifft eine Vorrichtung nach dem Oberbegriff des Patentanspruchs 1.

In Dienstleistungsbetrieben und Versandhäusern werden eingehende Anrufe oder Meldungen oft durch eine Vermittlungsvorrichtung zu Arbeitsplätzen durchgeschaltet und von Agenten entgegengenommen und bearbeitet. Die eingehenden Anrufe und Meldungen können nach verschiedenen Kriterien auf die Agenten oder auf bestimmte Gruppen von Agenten verteilt werden. Die Kriterien zur Verteilung der eingehenden Anrufe oder Meldungen können beispielsweise festgelegt werden nach Ursprung eines Anrufes oder nach Absender einer Meldung, nach gewählter Rufnummer oder nach gewählter Empfängeradresse. Es ist auch möglich, diese Kriterien nach einer Wahl des Anrufers oder des Absenders oder den speziellen Kenntnissen eines Agenten festzulegen.

Eingehende Anrufe oder Meldungen werden oft in der Vermittlungsvorrichtung in eine Warteschlange eingereiht. Die Funktion solcher Vermittlungsvorrichtungen ist in [3] Seite 127ff. beschrieben.

In [1] ist ein Verfahren und eine Vorrichtung beschrieben, bei der mit einer Steuereinheit (Callcentre-Controller) die Anrufverteilung nur auf jene Arbeitsplätze erfolgt, an denen sich ein Agent angemeldet hat.

Um eine gleichmässige Verteilung der Agentenauslastung zu erlangen, ist in [2] ein Verfahren und eine Vorrichtung angegeben, die eine Verteilung der eingehenden Anrufe aufgrund der vergangenen individuellen Auslastung der Agenten vornehmen.

Diese bekannten Lösungen weisen den Nachteil auf, dass bei Entfernung eines Agenten von seinem Arbeitsplatz weiterhin Anrufe dorthin vermittelt werden und erst nach einer festgelegten Anzahl Rufzyklen an andere Agenten weitergeleitet werden müssen. Dadurch entstehen für die Anrufer unliebsam lange Wartezeiten.

Es ist zwar möglich, dass sich ein Agent mittels einer Logout-Prozedur von seinem Arbeitsplatz abmelden kann, damit keine Anrufe oder eingehende Meldungen mehr zu seinem Arbeitsplatz durchgeschaltet werden. Dies wird aber von den Agenten für kurzzeitige Abwesenheiten oft aus Unachtsamkeit unterlassen. Die Handhabung der Logout-Prozedur ist zudem mit einem gewissen Aufwand verbunden.

Der vorliegenden Erfindung liegt daher die Aufgabe zugrunde, eine Vorrichtung anzugeben, durch die sich die Wartezeiten der Anrufer reduzieren lassen.

Diese Aufgabe wird durch die im Patentanspruch 1 angegebenen Massnahmen gelöst. Vorteilhafte Ausgestaltungen der Erfindung sind in weiteren Ansprüchen angegeben.

Durch die erfindungsgemässe Vorrichtung ist die aktuelle Belegung der Arbeitsplätze mit Agenten feststellbar und in der Vermittlungsvorrichtung registrierbar. Die Anwesenheit der Agenten an den Arbeitsplätzen wird mit einem Detektor unmittelbar erfasst und an die Vermittlungsvorrichtung gemeldet. Die Erfindung ermöglicht eine unmittelbare Behandlung von Überlastsituationen, da die tatsächliche Belegung der Arbeitsplätze in einer Vermittlungsvorrichtung in Echtzeit registriert ist. Insbesondere werden dadurch keine Anrufe und Meldungen an unbesetzte Arbeitsplätze durchgeschaltet.

Ein Detektor wird am Arbeitsplatz installiert. Dies kann beispielsweise durch Aufstellen eines Detektors auf einem Ausgabegerät eines dem Arbeitsplatz zugeordneten Datenverarbeitungssystems erfolgen. Die Installation ist einfach, da keine hardwaremässigen Eingriffe in das Datenverarbeitungssystem notwendig sind.

Die Erfindung wird nachfolgend anhand einer Zeichnung beispielsweise näher erläutert. Dabei zeigt:
- Fig. 1: ein Blockschaltbild einer Vermittlungsvorrichtung 10 mit der Anschaltung von Arbeitsplätzen 1_{A}, 1_{B}, 1_{C}, ... , 1_{X} ;
- Fig. 2: einen Arbeitsplatz 1 mit einem zugeordneten Detektor 6 und die Anschaltung an eine Vermittlungsvorrichtung 10 und
- Fig. 3: einen Arbeitsplatz 1 mit einem zugeordneten Detektor 6 und die Anschaltung an eine Vermittlungsvorrichtung 10 mit einer Zwischenschaltung eines Datenverarbeitungssystems.

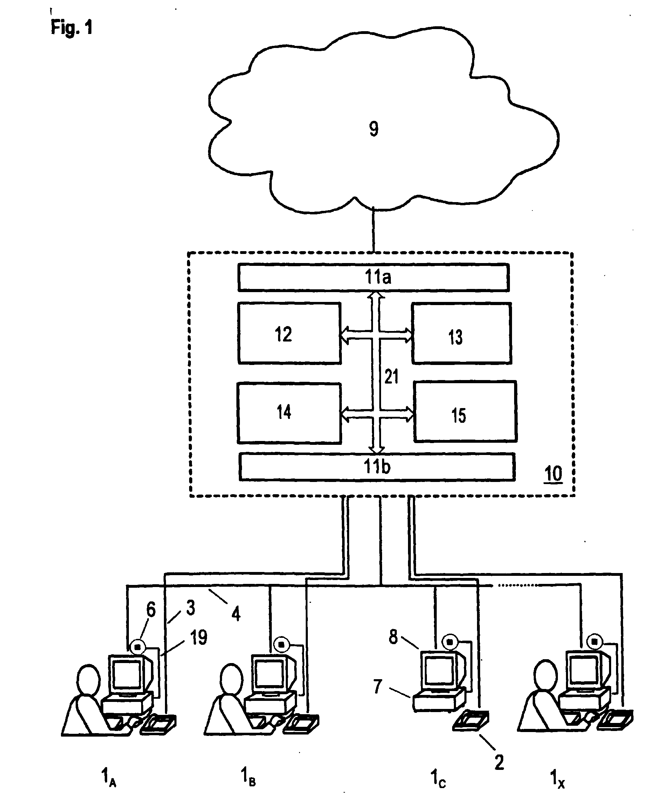

Figur 1 zeigt eine Vorrichtung zur Vermittlung 10 von Anrufen und/oder Meldungen an für Agenten vorgesehene Arbeitsplätze 1_{A}, 1_{B}, 1_{C}, ... , 1_{X}, die ein Datenverarbeitungssystem 7 und/oder ein Sprachendgerät 2 aufweisen, welche mit der Vermittlungsvorrichtung 10 verbunden sind. Jedem Arbeitsplatz 1_{A}, 1_{B}, 1_{C}, ... , 1_{X} ist wenigstens ein mit der Vermittlungsvorrichtung 10 verbundener Detektor 6 zugeordnet, durch den die Anwesenheit eines Agenten und somit die tatsächliche Belegung des Arbeitsplatzes 1_{A}, 1_{B}, 1_{C}, ... , 1_{X} feststellbar ist. Die von den Detektoren 6 festgestellten Belegungszustände der Arbeitsplätze 1_{A}, 1_{B}, 1_{C}, ... , 1_{X} sind der Vermittlungsvorrichtung 10 zuführbar und dort registrierbar. Die zu vermittelnden Anrufe und/oder Meldungen werden von der Vermittlungsvorrichtung 10 in Abhängigkeit der registrierten Belegungszustände nur an jene Arbeitsplätze 1_{A}, 1_{B}, ... , 1_{X} durchgeschaltet, die durch einen Agenten belegt sind. Der Arbeitsplatz 1_{c} ist als nicht besetzt dargestellt.

Die Vermittlungsvorrichtung 10 ist über eine erste Anschlusseinheit 11a mit einem Netzwerk 9 und über eine zweite Anschlusseinheit 11b sowie Leitungen verbunden. Ein Netzwerk 9 ist über eine Anschlusseinheit 11a mit der Vermittlungsvorrichtung 10 verbunden. Von der Vermittlungsvorrichtung 10 führen Leitungen 3, 4 an die Arbeitsplätze 1_{A}, 1_{B}, 1_{C}, ... , 1_{X}. Die Leitungen 3, 4 verbinden eine Anschlusseinheit 11b der Vermittlungsvorrichtung 10 und das pro Arbeitsplatz vorgesehene Sprachendgerät 2 und/oder Datenverarbeitungssystem 7. Die Anschaltung der Datenverarbeitungssysteme 7 an die Vermittlungsvorrichtung 10 ist vorzugsweise als lokales Netzwerk (LAN, local area network) ausgeführt.

Der Detektor 6 ist über eine Leitung 19 mit dem einem Arbeitsplatz 1_{A}, 1_{B}, 1_{C}, ... , 1_{X} zugeordneten Datenverarbeitungssystem 7 verbunden. Die mit dem Detektor 6 festgestellten Belegungszustände werden vom zugeordneten Datenverarbeitungssystem 7 ausgewertet und zur Vermittlungsvorrichtung 10 weitergeleitet.

Die Vermittlungsvorrichtung 10 enthält eine Durchschalteeinheit 12 (Switching Unit) und eine Anrufverteilungseinheit 15. Die Durchachalteeinheit 12 ist vorzugsweise so ausgebildet, dass der Ursprung von eingehenden Anrufen feststellbar ist; beispielsweise durch die Rufnummer des Anrufers oder durch die geographische Herkunft eines Anrufes. Zwischen Durchschalteeinheit 12 und Anrufverteilungseinheit 15 werden über ein Bussystem 21 Meldungen über die pro Arbeitsplatz geführten aktuellen Verbindungen und über den Ursprung eingehender Anrufe ausgetauscht. Die von den Detektoren 6 erfassten Belegungszustände der Arbeitsplätze 1_{A}, 1_{B}, 1_{C}, ..., 1_{X} werden mit dem jeweiligen Wert "Agent anwesend" oder "Agent abwesend" einer Belegungstabelle der Anrufverteilungseinheit 15 zugewiesen und dort registriert.

Die Anrufverteilungseinheit 15 weist aufgrund der registrierten Belegungszustände von Agenten und Arbeitsplätzen 1_{A}, 1_{B}, 1_{C}, ... , 1_{X} die Durchschalteeinheit 12 an, einen eingegangenen Anruf an einen Arbeitsplatz zu vermitteln, der erstens nicht durch ein Gespräch belegt ist und zweitens durch einen Agenten besetzt ist. Erfindungsgemäss wird die so auf aktuellem Stand geführte Belegurigstabelle für die Durchschaltung der Anrufe und Meldungen benutzt, damit Anrufe und Meldungen nur an besetzte und nicht durch ein Gespräch belegte Arbeitsplätze 1_{A}, 1_{B}, ..., 1_{X} durchgeschaltet werden.

Aus dem Netzwerk 9 eingehende Anrufe können der Vermittlungsvorrichtung 10 generell zu einer Selektion an eine Sprachbeantwortungseinheit 14 durchgeschaltet werden. Dies erlaubt, zusätzliche, vom Anrufer abzugebende Informationen aufzuzeichnen und an die Anrufverteilungseinheit 15 weiterzuleiten. Aus einem Vergleich der Anzahl eingehender Anrufe mit der in Echtzeit registrierten Beantwortungskapaziät erlaubt die Erfindung, Überlastsituationen sofort feststellen zu können. Es ist daher auch möglich, die Vermittlungsvorrichtung 10 so zu konfigurieren, dass eingehende Anrufe nur in so festgestellten Überlastsituationen an die Sprachbeantwortungseinheit 14 weitergeleitet werden.

Die Vermittlungsvorrichtung 10 enthält eine Datenbank 13, in der Bearbeitungsdaten wie beispielsweise Lagerbestände, Preislisten, Zustandsdaten und Kundenadressen gespeichert sind.

Der Ursprung der eingehenden Anrufe und/oder die vom Anrufer abgegebenen Informationen werden in der Anrufverteilungseinheit 15 ausgewertet, um einen Kontext mit den in der Datenbank 13 enthaltenen Bearbeitungsdaten herzustellen. Die Anrufverteilungseinheit 15 kann die Durchschalteeinheit 12 mit einer Meldung anweisen, zusätzlich zu einem Anruf auch die zugehörigen Bearbeitungsdaten aus der Datenbank 13 an das dem Arbeitsplatz 1_{A}, 1_{B}, ..., 1_{X} zugeordneten Datenverarbeitungssystem 7 durchzuschalten. Damit erhält ein Agent mit dem Anruf auch die zum Anrufer zugehörigen Bearbeitungsdaten und kann den Anrufer schneller mit Auskünften bedienen. Die Verteilung der Anrufe kann nach den in [10] angegebenen Kriterien (Routing) vorgenommen werden.

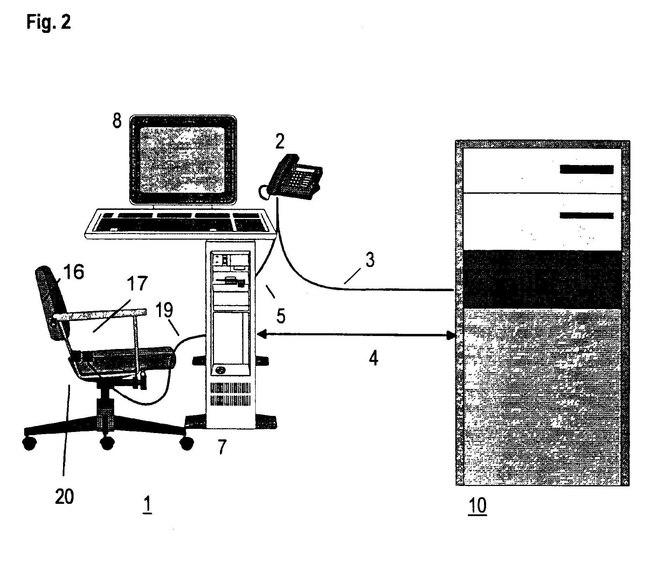

Fig. 2 zeigt einen für einen Agenten vorgesehenen Arbeitsplatz 1. Ein Datenverarbeitungssystem 7 mit einer Tastatur 22 und mit einem Ausgabegerät 8 ist Über eine Leitung 4 mit der Vermittlungsvorrichtung 10 verbunden. Als Ausgabegerät 8 ist ein Bildschirm vorgesehen.

Das Sprachendgerät 2 ist über Leitungen 3, 5 mit dem Datenverarbeitungssystem 7 und/oder mit der Vermittlungsvorrichtung 10 verbunden.

Zur Feststellung der Anwesenheit eines Agenten ist an jedem Arbeitsplatz ein Detektor 6 vorgesehen. Verschiedene Vorrichtungen zur Detektion eines Agenten werden nachfolgend in mehreren Beispielen beschrieben.

In Figur 2 ist der Detektor 6 als Drucksensor ausgebildet und mit dem Stuhl 16 verbunden. Der Drucksensor stellt eine Belastung des Stuhles 16 fest. Der Drucksensor ist im Polster der Sitzfläche 17 eines pro Arbeitsplatz 1 vorgesehenen Stuhles 16 eingebaut. Eine Ansteuerschaltung 18 ist dem Drucksensor zugeordnet. Der Drucksensor ist mit dem Datenverarbeitungssystem 7 über eine Leitung 19 verbunden und so dimensioniert, dass eine Belastung des Stuhls 16 durch zufällig auf dem Stuhl abgelegte Objekte wie z.B. Aktenkoffer oder tragbare Computer nicht als eine Belegung registriert wird.

Die Anschaltung von Drucksensoren kann nach den in [4] Seite 908 ff. enthaltenen Regeln erfolgen. Der Anschluss an ein Datenverarbeitungssystem 7 ist grundsätzlich bekannt und erfolgt gleich wie z.B. die Anschaltung eines Joysticks. Die Erfassung der registrierten Belegungen ab einer Schnittstelle des Datenverarbeitungssystems 7 sowie die Auswertung und Weitergabe an eine Login-/Logout-Prozedur erfolgen vorteilhafterweise mit einem speicherresidenten Programm. Ein solches Programm wird vorzugsweise beim Start der Anwendungen in den Arbeitsspeicher des Datenverarbeitungssystems 7 geladen. Je nach eingesetztem Betriebssystem kann dieses Programm als Dienstprogramm und/oder als Gerätetreiber ausgebildet sein.

Es ist möglich, dass die Detektoren 6 auch direkt an die Vermittlungsvorrichtung 10 angeschlossen sind. Zweckmässigerweise wird dafür ein Konzentrator eingesetzt. Die Herkunft der eingehenden Detektorsignale wird aufgrund der Anschlussbelegung vom Konzentrator als Adresse registriert. Durch Multiplexierung werden die Detektorsignale und die zugehörigen Adressen, an die Anschlusseinheit 11b der Vermittlungsvorrichtung 10 weitergeleitet.

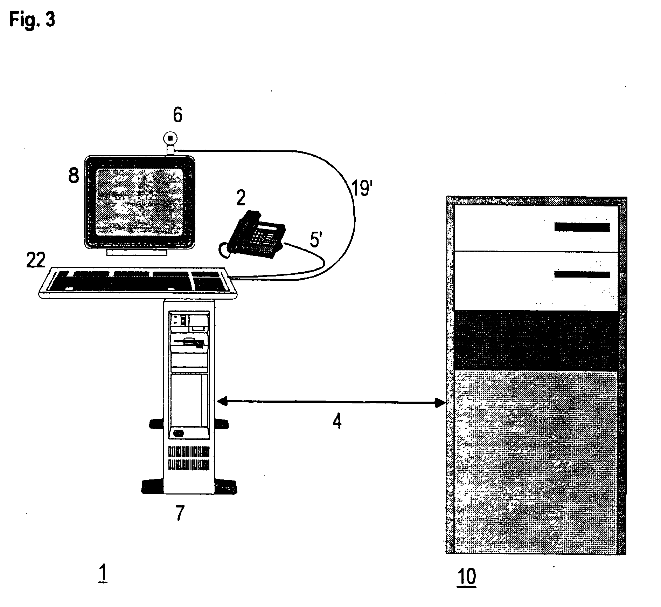

Fig. 3 zeigt einen Arbeitsplatz 1, bei dem der Detektor 6 mit einer Leitung 19' an die dem Datenverarbeitungssystem 7 zugeordnete Tastatur 22 angeschlossen ist. Auch das Sprachendgerät 2 kann in einer vorzugsweisen Ausgestaltung an die Tastatur 22 angeschlossen sein. Die für die Übertragung der Detektorsignale und allenfalls für die Übertragung der Sprache notwendigen Kanäle und/oder Leitungen können zusätzlich zur Verbindung Tastatur 22 und Datenverarbeitungssystem 7 vorgesehen werden. Es ist aber auch möglich, für die Verbindung zwischen Tastatur 22 und Datenverarbeitungssystem 7 eine USB-Schnittstelle vorzusehen (USB: Universal Serial Bus). Die Ausgestaltung der USB-Schnittstelle in der Tastatur kann mit Bauelementen der Firma Intel vorgenommen werden; vorzugsweise wird ein Steuerbaustein des Typs 8x931AA oder 8x931HA verwendet, da in den Tastaturen üblicherweise Prozessoren des Typs 8051 oder 8031 eingesetzt sind. Einzelheiten für die Ausgestaltung der USB-Schnittstelle sind den Schriften [11] und [12] zu entnehmen.

In einer anderen vorteilhaften Ausführungsform wird ein Stuhl 16 mit einer elastischen Lagerung der Sitzfläche 17 verwendet. Ein Detektor stellt eine Verschiebung 20 der Sitzfläche 17 fest. Eine Verschiebung der Sitzfläche 17 resultiert aus einer Belastung des Stuhls 16 durch das Körpergewicht eines Agenten. Als Detektor kann beispielsweise ein Reed-Relais, ein Schalter mit einem zugehörigen Betätigungsmechanismus oder eine Lichtschranke eingesetzt werden. Reed-Relais und ein zugeordneter Magnet sind am oder im Fuss des Stuhles so befestigt, dass eine Belastungsänderung zu einer Relativbewegung Magnet - Reed-Relais führt und eine Zustandsänderung des Reed-Relais auslöst. Diese. Relativbewegung kann auch benutzt werden, um einen Schalter zu betätigen oder den Lichtstrahl einer Lichtschranke zu unterbrechen bzw. wieder freizugeben.

Die Belegungszustände "Agent anwesend" bzw. "Agent abwesend" werden entweder aufgrund einer festgestellten Belegungszustandsänderung oder in einem festen Zeittakt an die Login-/Logout-Prozedur übergeben. Abhängig von den Gewohnheiten des betreffenden Agenten kann ein solcher Zeittakt bei der Konfigurierung des zugeordneten Datenverarbeitungssystems 7 in einem bestimmten Bereich festgelegt werden.

Der Detektor 6 kann auch sehr kurzzeitige Bewegungen eines Agenten erfassen. Damit solche Bewegungsänderungen nicht zu einer zu registrierenden Belegungszustandsänderung führen, kann die Ansteuerschaltung mit einem Totzeitglied und/oder mit einem Integrierglied versehen sein. Damit werden Belegungszustandsänderungen erst dann an die Vermittlungsvorrichtung 10 weitergeleitet, wenn die vom Detektor erfassten Belastungen zeitlich gesehen einigermassen konstant sind.

Zusätzlich oder alternativ zu einer Auswertung und Glättung der Detektorsignale in der Ansteuerschaltung 18 kann eine Auswertung und Glättung im Datenverarbeitungssystem 7 des Arbeitsplatzes 1 vorgenommen werden.

Unabhängig von der gewählten Art des Detektors kann eine drahtlose Übertragung der Belegungszustände von Detektoren zu einer am Datenverarbeitungssystem anschliessbaren Empfangseinheit vorgesehen sein. Das Übertragungsverfahren benutzt entweder den Infrarotbereich oder einen für solche Zwecke freigegebenen Funkfrequenzbereich.

In Figur 1 ist ein Detektor 6 auf dem Ausgabegerät 8 angeordnet und mit dem Datenverarbeitungssystem 7 über eine Leitung 19 verbunden. Als Detektor 6 kann ein Infrarotsensor eingesetzt werden. Der Infrarotsensor misst die von einer Person abgegebene Wärmestrahlung. Die Empfangscharakteristik dieses Infrarotsensors ist so gewählt, dass sich ein Agent an seinem Arbeitsplatz 1_{A}, 1_{B}, ..., 1_{X} sowohl seitlich als auch in der Tiefe etwas bewegen kann, ohne dass dadurch eine deutlich signifikante Messwertänderung stattfindet. Die Empfangscharakteristik beinhaltet einen bestimmten Sektor, vorzugsweise in der Grössenordnung 120°. Die Distanz, die ein solcher Infrarotsensor noch erkennen soll, kann über einen Schwellwert eingestellt werden. Dabei ist zu berücksichtigen, dass die Wärmestrahlungsleistung quadratisch mit der Distanz abfällt. Die Einstellung des Schwellwertes kann entweder am Infrarotsensor oder in einem Programmteil des Datenverarbeitungssystems 7 vorgenommen werden.

In einer weiteren vorteilhaften Ausgestaltung der Erfindung ist als Detektor 6 eine Lichtschranke vorgesehen. Der Lichtstrahl dieser Lichtschranke ist so angeordnet, dass dieser bei Anwesenheit eines Agenten an einem Arbeitsplatz unterbrochen wird.

Der als Lichtschranke oder als Infrarotsensor ausgebildete Detektor kann auch im Gehäuse des Ausgabegerätes 8 oder in einer Videokamera eingebaut sein. Die Videokamera ist vorzugsweise auf oder neben dem Ausgabegerät angeordnet. Die Videokamera kann zusätzlich als Aufnahmekamera eines Bildtelefones vorgesehen sein.

Als Detektor 6 kann auch ein Ultraschall-Bewegungs-Detektor vorgesehen werden, der vorzugsweise auf dem Ausgabegerät 8 angeordnet ist. Als Ultraschall-Bewegungs-Detektor kann beispielsweise das von der Firma SWEL in D-17509 Kemnitz vertriebene Gerät vom Typ "SWEL Anwesenheits-Sensor CUBI" eingesetzt werden. Einzelheiten zu diesem Gerät, sind der Schrift [13] zu entnehmen. Solche Ultraschall-Bewegungs-Detektoren arbeiten nach dem Ultraschall-Echo-Verfahren. Der Ultraschall-Bewegungs-Detektor sendet kurze Schallimpulse aus und registriert das resultierende Echo. Eine Analyse des Echos wird zu einem Signal "Agent anwesend" oder "Agent abwesend" aufbereitet. Bei solchen Ultraschall-Bewegungs-Detektoren ist die Reichweite vorzugsweise einstellbar.

Selbstverständlich ist die Erfindung nicht auf die vorstehend beschriebenen Detektoren beschränkt. Es können auch noch andere, dem Fachmann bekannte Messfühler und Sensoren für die Detektion von Agenten eingesetzt werden.

Anstelle eines Sprachendgerätes 6 ist es auch möglich, eine Sprechgarnitur bestehend aus Kopfhörer und Mikrofon vorzusehen. Bedienvorgänge des Agenten wie beispielsweise das Eintreten auf einen Anruf, die Weiterleitung eines Anrufes oder die Terminierung eines Anrufes erfolgen dabei über das Datenverarbeitungssystem. Eingaben werden vom Agenten über die Tastatur 22 vorgenommen, die Signalisierung von Verbindungszuständen kann akustisch und/oder über die Ausgabeeinheit 8 auch optisch erfolgen.

Die Detektion von Agenten an Arbeitsplätzen 1_{A}, 1_{B}, 1_{C}, ..., 1_{X} ist zu einer Identifikation von Agenten erweiterbar. Die an den Arbeitsplätzen 1_{A}, 1_{B}, 1_{C}, ..., 1_{X} zuzulassenden Personen werden in einer Initaleinstellung mittels einer Abspeicherung von Personendaten wie beispielsweise Name und Profil und diese Personen kennzeichnenden Merkmalsdaten in der Datenbank 13 registriert. Damit sind in der Vermittlungsvorrichtung 10 die benötigten Daten zur Identifizierung der zugelassenen Agenten gespeichert.

Die Identifikation kann mit einer Gesichtserkennung der Agenten erfolgen. Geräte und Verfahren zur Gesichtserkennung sind z.B. aus [7] bekannt. Alternativ kann diese Identifikation mit einem vom Agenten sichtbar an einem Kleidungsstück zu tragenden Barcode-Streifen oder mit einem vom Agenten mitgeführten Transponder, vorzugsweise einem Oberflächenwellenbauteil erfolgen.

Für die Erfassung eines Gesichtes dient eine als Detektor 6 ausgebildete Videokamera, die am Datenverarbeitungssystem 7 eines Arbeitsplatzes 1_{A}, 1_{B}, 1_{C}, ..., 1_{X} angeschlossen ist. Durch eine Abtastung werden von der Videokamera die Gesichtsaufnahmen im zugeordneten Datenverarbeitungssystem 7 zu Merkmalsdaten aufbereitet und mit den in der Datenbank 13 abgespeicherten Merkmalsdaten verglichen. Bei Gleichheit wird eine Login-Prozedur gestartet und der betreffende Arbeitsplatz wird in der Belegungstabelle der Anrufverteilungseinheit 15 mit dem Belegungsaustand "Agent anwesend" registriert. Ebenfalls wird in der Belegungstabelle die Identität des betreffenden Agenten abgespeichert.

Die Videokamera kann das Gesicht eines Agenten in einem einstellbaren Zeittakt abtasten.

Aus [5] ist die Herstellung eines Personalausweises mit Personenangaben in Form von Text, Bild und Barcode bekannt. Die Agenten tragen einen an einem Kleidungsstück befestigten Personalausweis, der wenigstens einen Barcode-Streifen aufweist. Pro Agent ist ein individuell festgelegter Barcode vorgesehen. Einem Arbeitsplatz 1_{A}, 1_{B}, 1_{C}, ... , 1_{X} ist ein Barcode-Lesegerät zugeordnet, das einen Barcode-Streifen bis auf eine Distanz von ca. 1 m zuverlässig lesen kann. Der Anschluss eines Barcode-Lesegerätes an das Datenverarbeitungssystem 7 kann nach den in [6] angegebenen Regeln erfolgen.

Aus [9] Seite 29 ist der Einsatz von OFW bzw. SAW (Oberflächenwellen bzw. surface acoustic waves) - Bauteilen zur Identifikation von Automobilen bekannt, die eine Kontrollstation passieren. Das OFW-Bauteil ist dabei in der Lage, ein eintreffendes Signal in eine Oberflächenwelle umzuwandeln, die sich über die Oberfläche des OFW-Bauteils ausbreitet. Auf der Oberfläche des OFW-Bauteils sind elektroakustische Wandler und Reflektoren vorgesehen, die in der Lage sind, einen Teil der an ihnen vorbeilaufenden Oberflächenwellen wieder in elektrische Signale umzuwandeln und zu reflektieren.

Aus [8] sind eine Abfrageeinheit und zugehörige Transponder bekannt, die eine Identifikation eines beweglichen Objektes erlauben. Einem beweglichen Objekt ist ein Transponder zugeordnet, wobei die Transponder bei einer Abfrage durch die Abtrageeinheit je ein individuelles Antwortsignal geben.

Jeder Agent führt einen ihm zugeordneten Transponder mit, beispielsweise in Form eines kleinen in einer Tasche eines Kleidungsstückes mitgeführten Anhängers.

Wenigstens einem der Arbeitsplätze 1_{A}, 1_{B}, 1_{C}, ... , 1_{X} ist eine als Detektor 6 ausgebildete Abtrageeinheit zugeordnet; welche die Anwesenheit und Identität eines in der unmittelbaren Umgebung vorhandenen Transponders feststellt. Die Abfrageeinheit ist an das Datenverarbeitungssystem 7 angeschlossen. In der Vermittlungsvorrichtung 10 sind die einen Transponder eindeutig identifizierenden Daten als Merkmalsdaten gespeichert. Befindet sich ein Agent mit einem Transponder in unmittelbarer Nähe eines Arbeitsplatzes, wird dies von der Abfrageeinheit registriert. Die Identität des betreffenden Agenten wird über das Datenverarbeitungssystem 7 der Vermittlungsvorrichtung 10 zugeführt und dort mit den abgespeicherten Merkmalsdaten verglichen. Bei Gleichheit erfolgt eine Registrierung des Agenten und des betreffenden Arbeitsplatzes.

Die Erweiterung der Erfindung zu einer Identifikation von Agenten hat den Vorteil, dass Agenten die an einer solchen Vermittlungsvorrichtung 10 angeschlossenen Arbeitsplätze 1_{A}, 1_{B}, 1_{C}, ... , 1_{X} beliebig auswählen können. Durch die Anwesenheit eines Agenten an einem Arbeitsplatz 1_{A}, 1_{B}, ... , 1_{X} wird ohne weitere Interaktion des Agenten eine Login-Prozedur gestartet. Dadurch wird die Anwesenheit eines Agenten an einem Arbeitsplatz 1_{A}, 1_{B}, 1_{C}, ... , 1_{X} der Vermittlungsvorrichtung 10 gemeldet und der Belegungszustand und die festgestellte Identität eines Agenten in der Belegungstabelle der Anrufverteilungseinheit 15 registriert. Hat sich ein Agent von einen Arbeitsplatz 1_{C} entfernt, wird dies vom gleichen Detektor festgestellt und mittels einer dadurch ausgelösten Logout-Prozedur wird der Belegungszustand in der Belegungstabelle auf "Agent abwesend" gesetzt. Dadurch werden dem betreffenden Arbeitsplatz 1_{C} keine Anrufe und/oder Meldungen mehr durchgeschaltet.

### Liste der Bezugszeichen

- 1: Arbeitsplatz
- 2: Sprachendgerät
- 3: Verbindung Sprachendgerät - Datenverarbeitungssystem
- 4: Verbindung Datenverarbeitungssystem - Vermittlungsvorrichtung
- 5: Verbindung Sprachendgerät Vermittlungsvorrichtung
- 5': Verbindung Sprachendgerät - Tastatur
- 6: Detektor
- 7: Datenverarbeitungssystem
- 8: Ausgabegerät
- 9: Netzwerk
- 10: Vermittlungsvorrichtung
- 11a: Anschlusseinheit
- 11b: Anschlusseinheit
- 12: Durchschalteeinheit
- 13: Datenbank
- 14: Sprachbeantwortungseinheit
- 15: Anrufverteilungseinheit
- 16: Stuhl
- 17: Sitzfläche
- 18: Ansteuerschaltung
- 19: Verbindung Detektor - Datenverarbeitungssystem
- 19': Verbindung Detektor - Tastatur
- 20: Verschiebung der Sitzfläche
- 21: Bussystem
- 22: Tastatur

### Literaturliste

[1] U.S. Patent 5.742.675
   Method and apparatus for automatically distributing calls to available logged-in callhandling agents
[2] U.S. Patent 5.828.747
   Call distribution based an agent occupancy
[3] Understanding Networked Multimedia, Fluckiger François, Prentice Hall Europe 1995
[4] Halbleiter-Schaltungstechnik, U. Tietze, Ch. Schenk, 10. Auflage, Springer-Verlag Berlin Heidelberg New York, 1993
[5] U.S. Patent 5.635.012
   System tor producing a personal ID card
[6] U.S. Patent 5.664.231
   PCMCIA interface card for coupling input devices such as barcode scanning engines to personal digital assistants and palmtop computers
[7] U.S. Patent 4.449.189
   Personal access control system using speech and face recognition
[8] U.S. Patent 5.719.550
   Arrangement for identification of a movable object having a transponder
[9] John Gosch, SAW TECHNOLOGY DRIVES AUTO ID, ROAD-TOLL SYSTEM, ELECTRONIC DESIGN vom 26. April 1990.
[10] Nachrichtentechnische Zeitschrift na Heft 12/1998, Herausgeber VDE, Offenbach, "Umfassende Beratung ist bei der Call-Center-Einrichtung das Wichtigste", Seiten 60 - 62.
[11] Intel® March 1998 8x931AA/8x931HA Universal Serial Bus Peripheral Controller Advanced Information Datasheet
[12] Intel® 1996 USB Mobile System Design Guidelines
[13] SWEL D-17509 Kemnitz SWEL-Anwesenheits-Sensor CUBI, Dokumentation Stand Okt. 1998

## Patentansprüche

1. Vorrichtung zur Vermittlung (10) von Anrufen und/oder Meldungen an für Agenten vorgesehene Arbeitsplätze (1, 1_{A}, 1_{B}, 1_{C}, ... , 1_{X}), die ein Datenverarbeitungssystem (7) und/oder ein Sprachendgerät (2) aufweisen, welche mit der Vermittlungsvorrichtung (10) verbunden sind, **dadurch gekennzeichnet**, dass jedem Arbeitsplatz (1, 1_{A}, 1_{B}, 1_{C}, ..., 1_{X}) wenigstens ein mit der Vermittlungsvorrichtung (10) verbundener Detektor (6) zugeordnet ist, durch den die Anwesenheit eines Agenten und somit die tatsächliche Belegung des Arbeitsplatzes (1, 1_{A}, 1_{B}, 1_{C}, ... , 1_{X}) feststellbar ist, dass die von den Detektoren (6) festgestellten Belegungszustände der Arbeitsplätze (1, 1_{A}, 1_{B}, 1_{C}, ... , 1_{X}) der Vermittlungsvorrichtung (10) zuführbar und dort registrierbar sind und dass die zu vermittelnden Anrufe und/oder Meldungen von der Vermittlungsvorrichtung (10) in Abhängigkeit der registrierten Belegungszustände an Arbeitsplätze (1, 1_{A}, 1_{B}, 1_{C}, ... , 1_{X}) durchachaltbar sind, die durch einen Agenten belegt sind.

2. Vorrichtung nach Anspruch 1, **dadurch gekennzeichnet**, dass der Detektor (6) direkt mit der Vermittlungsvorrichtung (10) oder mit dem Datenverarbeitungssystem (7) verbunden ist, über welche die vom Detektor (6) festgestellten Belegungszustände an die Vermittlungsvorrichtung (10) weitergeleitet werden.

3. Vorrichtung nach Anspruch 1, **dadurch gekennzeichnet**, dass der Detektor (6) über die einem Datenverarbeitungssystem (7) zugeordnete Tastatur (22) mit dem Datenverarbeitungssystem (7) verbunden ist, über die vom Detektor (6) festgestellten Belegungszustände an die Vermittlungsvorrichtung (10) weitergeleitet werden.

4. Vorrichtung nach einem der Ansprüche 1 bis 3, **dadurch gekennzeichnet**, dass wenigstens einem Arbeitsplatz (1) ein für den entsprechenden Agenten vorgesehener Stuhl (16) zugeordnet ist, der derart mit einem Detektor (6) versehen ist, dass die Belastung des Stuhles (16) durch das Körpergewicht des Agenten als Belegung des Arbeitsplatzes (10) interpretiert und der Vermittlungsvorrichtung (6) gemeldet wird.

5. vorrichtung nach Anspruch 4, **dadurch gekennzeichnet**, dass die Sitzfläche (17) des Stuhls (16) elastisch gelagert ist, wobei die Belastung des Stuhls (16) durch das Körpergewicht des Agenten bzw. die entsprechende Verschiebung der Sitzfläche (16, 20) durch den Detektor (6) feststellbar ist.

6. Vorrichtung nach Anspruch 5, **dadurch gekennzeichnet**, dass der Detektor (6) ein Sensorelement umfasst, das zur Messung der Änderung eines Druckes, eines magnetischen Feldes oder eines Lichtstromes dient, die bei Verschiebung der Sitzfläche (16, 20) verursacht wird.

7. Vorrichtung nach Anspruch 5, **dadurch gekennzeichnet**, dass der Detektor (6) einen Schalter aufweist, der bei Verschiebung der Sitzfläche (16, 20) betätigt wird.

8. Vorrichtung nach einem der Ansprüche 1 bis 3, **dadurch gekennzeichnet**, dass der Detektor (6) einen Infrarotsensor aufweist, durch den die Wärmeabstrahlung des Agenten erfasst wird, sobald er sich im Bereich eines Arbeitsplatzes (1, 1_{A}, 1_{B}, 1_{C}, ... , 1_{X}) aufhält.

9. Vorrichtung nach einem der Ansprüche 1 bis 3, **dadurch gekennzeichnet**, dass der Detektor (6) mit wenigstens einer Lichtschranke verbunden ist, die derart angeordnet ist, dass deren Lichtstrahl unterbrochen wird, sobald sich ein Agent im unmittelbaren Bereich des Arbeitsplatzes (1) aufhält.

10. Vorrichtung nach Anspruch 8 oder 9, **dadurch gekennzeichnet**, dass der Detektor (6) in einem mit dem Datenverarbeitungssystem (7) verbundenen Ausgabegerät (8) oder in einer mit dem Datenverarbeitungssystem (7) verbundenen Videokamera eingebaut ist.

11. Vorrichtung nach einem der Ansprüche 1 bis 9, **dadurch gekennzeichnet**, dass die Verbindung zwischen dem Detektor (6) und der Vermittlungsvorrichtung (10) oder dem Datenverarbeitungssystem (7) drahtlos herstellbar ist.

12. Vorrichtung nach einem der Ansprüche 1 bis 11, **dadurch gekennzeichnet**, dass einen Agenten kennzeichnende Merkmale vom Detektor (6) erfassbar sind und dazu korrespondierende Merkmalsdaten der Vermittlungsvorrichtung (10) zuführbar sind, mit in einer Datenbank (13) vorgängig gespeicherten Merkmalsdaten von bestimmten Agenten vergleichbar sind und dadurch der aus dem Vergleich resultierende Belegungszustand des betreffenden Arbeitsplatzes (1, 1_{A}, 1_{B}, 1_{C}, ... , 1_{X}) in der Vermittlungsvorrichtung (10) registrierbar ist.

13. Vorrichtung nach Anspruch 12, **dadurch gekennzeichnet**, dass der Detektor (6) als Videokamera ausgebildet ist und die einen Agenten kennzeichnenden Merkmale aus einer Gesichtserkennung gebildet werden.

14. Vorrichtung nach Anspruch 12, **dadurch gekennzeichnet**, dass der Detektor (6) als Barcode-Lesegerät ausgebildet ist und die kennzeichnenden Merkmale aus von Agenten zu tragenden und individuell zugeordneten Barcode-Streifen gebildet werden.

15. Vorrichtung nach Anspruch 12, **dadurch gekennzeichnet**, dass der Detektor (6) als Abfrageeinheit für Transponder ausgebildet ist und die kennzeichnenden Merkmale aus von Agenten zu tragenden und individuell zugeordneten Transpondern gebildet werden.

16. Vorrichtung nach Anspruch 15, **dadurch gekennzeichnet**, dass der Detektor (6) als Abfrageeinheit für Oberflächenwellenbauteile ausgebildet ist und die kennzeichnenden Merkmale aus von Agenten zu tragenden und individuell zugeordneten Oberflächenwellenbauteilen gebildet werden.

17. Vorrichtung nach einem der Ansprüche 1, 2, 3 oder 11, **dadurch gekennzeichnet**, dass der Detektor (6) einen Ultraschallsensor aufweist, durch den das Echo von ausgesandten Ultraschallimpulsen registrierbar und als festgestellter Belegungszustand an die Vermittlungsvorrichtung zuführbar ist.
